# EUROPEAN PATENT APPLICATION

(11) **EP 3 584 719 A1**
(43) Date of publication of application: **25.12.2019**
(21) Application number: 17902691.9
(22) Date of filing: 28.11.2017
(51) Int. Cl.: G06F 17/16

(54) **METHOD AND DEVICE FOR MULTIPLYING MATRICES WITH VECTORS**

(30) Priority: 31.03.2017 CN 201710211498
(71) Applicant: Huawei Technologies Co., Ltd., Longgang District Shenzhen, Guangdong 518129 (CN)
(72) Inventor: TU, Jiajin, Shenzhen Guangdong 518129 (CN); ZHU, Fan, Shenzhen Guangdong 518129 (CN); LIN, Qiang, Shenzhen Guangdong 518129 (CN); LIU, Hu, Shenzhen Guangdong 518129 (CN)
(74) Representative: Pfenning, Meinig & Partner mbB
(86) International application number: PCT/CN2017/113422
(87) International publication number: WO 2018/176882

(57) **Abstract**

Embodiments of the present invention disclose a matrix and vector multiplication operation method and apparatus. The method includes: obtaining first indication information of a matrix element; reading a matrix element value of a non-zero element from a preset matrix based on the first indication information, and determining a first location mark code of the read matrix element value; obtaining second indication information of a vector element; reading, from input vector data based on the second indication information, a vector element value of a second location mark code corresponding to the first location mark code; and obtaining a multiplication operation value of the matrix element value and the vector element value. According to the embodiments of the present invention, data processing complexity can be reduced, data processing power consumption can be reduced, and data processing efficiency can be increased.

## Description

### TECHNICAL FIELD

This application relates to a matrix and vector multiplication operation method and apparatus.

### BACKGROUND

Due to excellent performance of a convolutional neural network in data processing application such as image recognition, image classification, and audio recognition, the convolutional neural network has become one of hot topics in various academic studies. However, there are a large quantity of floating-point number multiply-accumulate operations in the convolutional neural network, including a matrix and vector multiplication operation, which require a heavy operation amount and are time-consuming, and consequently, hardware energy consumption of the convolutional neural network is high. Therefore, how to reduce a floating-point number operation amount in the convolutional neural network becomes one of technical problems that need to be urgently resolved at present.

In the prior art, when a matrix and vector operation in the convolutional neural network is performed, a location of a non-zero element in a matrix is recorded by detecting the non-zero element in the matrix in real time, and the non-zero element is selected from the matrix, to perform a multiply-accumulate operation on the selected non-zero element and a vector element. In the prior art, performing the matrix and vector operation needs to determine in real time whether a value of a matrix element is zero, and record the location of the non-zero element in real time, implementation complexity of real-time determining and recording is high, operations are complex, data processing efficiency is low, and applicability is low.

### SUMMARY

This application provides a matrix and vector multiplication operation method and apparatus, to reduce data processing complexity, reduce data processing power consumption, and improve data processing efficiency.

A first aspect provides a matrix and vector multiplication operation method. The method may include:
obtaining first indication information of a matrix element, where the first indication information is used to indicate a non-zero element in a preset matrix;
reading a matrix element value of the non-zero element from the preset matrix based on the first indication information, and determining a first location mark code of the read matrix element value, where the first location mark code is a location mark of the matrix element value in matrix data that is obtained through a single read;
obtaining second indication information of a vector element, where the second indication information is used to indicate to-be-read vector data information;
reading, from input vector data based on the second indication information, a vector element value of a second location mark code corresponding to the first location mark code; and
obtaining a multiplication operation value of the matrix element value and the vector element value.

In this application, indication information of a matrix read pointer is used to indicate a non-zero element in a to-be-processed matrix, and a non-zero element value is read from the preset matrix, to perform a multiplication operation on the read non-zero element value and a vector data value. In this application, the vector data value corresponding to a location of the matrix element value may be read from the input vector data based on indication information of a vector read pointer, to reduce a matrix element value determining operation in a multiplication operation process, so as to reduce data processing complexity, reduce data processing power consumption, and improve data processing efficiency.

With reference to the first aspect, in a first possible implementation, before the obtaining first indication information of a matrix element, the method further includes:
obtaining a to-be-processed matrix, and performing location marking on each matrix element in the to-be-processed matrix to obtain a pre-mark code of each matrix element, where each row of the to-be-processed matrix includes K elements, and K is an integer greater than 0;
selecting a non-zero element in the to-be-processed matrix, and generating the preset matrix based on a pre-mark code of the non-zero element in the to-be-processed matrix, where each row of the preset matrix includes K non-zero elements; and
generating the first indication information of the matrix element based on the preset matrix and pre-mark codes of various non-zero elements included in the preset matrix.

In this application, the to-be-processed matrix that participates in a multiplication operation may be preprocessed, a zero element in the to-be-processed matrix is removed to obtain the preset matrix, and the preset matrix is stored to specified storage space, so that indication information of a matrix read pointer may be generated based on a location relationship of the various non-zero elements in the preset matrix. The indication information of the matrix read pointer may be used to schedule a matrix element in a matrix and vector multiplication operation, to improve accuracy of scheduling the matrix element and data processing efficiency, and reduce operation complexity of reading the matrix element.

With reference to the first possible implementation of the first aspect, in a second possible implementation, after the generating the preset matrix based on a pre-mark code of the non-zero element in the to-be-processed matrix, the method further includes:
processing, based on a preset size of matrix data that is read during current calculation, the pre-mark codes of the various non-zero elements included in the preset matrix, to obtain location mark codes of the various non-zero elements; and
adding the location mark codes of the various non-zero elements to the first indication information, where
a location mark code of any one of the various non-zero elements is less than the size of the data.

In this application, code marking may be performed on the non-zero element of the preset matrix based on a size of data read in a single operation, and a location mark code of any non-zero element is less than the size of the data read in the single operation, so that a bit width of the mark code is fixed, thereby reducing data processing complexity.

With reference to the first possible implementation of the first aspect or the second possible implementation of the first aspect, in a third possible implementation, the first indication information includes a matrix read pointer, a matrix valid pointer, and a quantity of valid matrix elements;
the matrix read pointer is used to indicate a to-be-read matrix element row that participates in the current calculation in the preset matrix;
the matrix valid pointer points to a location of a start non-zero element that participates in the current calculation in the to-be-read matrix element row;
the quantity of valid matrix elements is used to indicate a quantity M of to-be-read non-zero elements that participate in the current calculation, and M is an integer greater than or equal to 1; and
the reading a matrix element value of the non-zero element from the preset matrix based on the first indication information includes:
searching the preset matrix for a specified matrix element row to which the matrix read pointer points, and reading, starting from a specified location to which the matrix valid pointer points, M matrix element values from the specified matrix element row.

In this application, parameters such as the matrix read pointer, the matrix valid pointer, and the quantity of valid matrix elements may be used to indicate information such as read locations and a read quantity of non-zero elements of the preset matrix, to improve scheduling convenience of the matrix element, so as to improve data processing efficiency.

With reference to the third possible implementation of the first aspect, in a fourth possible implementation, the first indication information further includes a matrix read pointer increment;
an initial value of the matrix read pointer increment is zero, indicating that a to-be-read matrix element row in the current calculation is a matrix element row indicated by the matrix read pointer; and
the generating the first indication information of the matrix element based on the preset matrix and pre-mark codes of various non-zero elements included in the preset matrix includes:
if M is greater than a quantity of remaining non-zero elements in the to-be-read matrix element row, increasing the matrix read pointer increment by 1, where increasing the matrix read pointer increment by 1 indicates that a to-be-read matrix element row in next calculation is two rows after the matrix element row indicated by the matrix read pointer, and
the remaining non-zero elements are non-zero elements that are included in the to-be-read matrix element row and that are after the location to which the matrix valid pointer points.

In this application, the matrix element row traced by the matrix read pointer may be marked by using the matrix read pointer increment, to further ensure scheduling accuracy of the matrix element, and improve data processing efficiency.

With reference to the third possible implementation of the first aspect, in a fifth possible implementation, the method further includes:
updating the matrix read pointer based on the matrix read pointer increment, to obtain a matrix read pointer of the next calculation.

In this application, the matrix read pointer may be updated by using the matrix read pointer increment, to ensure accuracy of a matrix element row to which the matrix read pointer points in each operation, improve accuracy of data scheduling, and improve applicability.

With reference to any one of the first possible implementation of the first aspect to the fifth possible implementation of the first aspect, in a sixth possible implementation, the to-be-read vector data information includes a to-be-read vector data row in the current calculation; and
before the obtaining second indication information of a vector element, the method further includes:
determining, based on the pre-mark code of the non-zero element in the to-be-processed matrix, a quantity of non-zero elements included in each matrix element row in the to-be-processed matrix; and
generating the second indication information of the vector element based on the quantity of non-zero elements included in each matrix element row, where
the second indication information includes a to-be-read vector data row indicated by a vector read pointer and a vector read pointer increment; and
the vector read pointer increment indicates a quantity of rows spaced between a to-be-read vector data row of the next calculation and a vector data row indicated by the vector read pointer.

In this application, indication information of the vector read pointer may be determined based on the quantity of non-zero elements in each matrix element row in the to-be-processed matrix, and the indication information of the vector read pointer is used to indicate a vector data row whose vector data is read from the input vector data during a multiplication operation, to ensure accuracy of a vector data and matrix element value multiplication operation, and improve accuracy of data scheduling.

With reference to the sixth possible implementation of the first aspect, in a seventh possible implementation, the generating the second indication information of the vector element based on the quantity of non-zero elements included in each matrix element row includes:
if the quantity of non-zero elements included in each matrix element row is not zero, setting the vector read pointer increment to H, where H is a ratio of the preset size of the matrix data that is read during the current calculation to K; or
if a quantity H₁ of matrix element rows whose quantity of non-zero elements included is zero is greater than H, setting the vector read pointer increment to H₁.

In this application, the vector read pointer increment may be further set based on the zero elements included in each matrix element row in the to-be-processed matrix, a vector data row to be read during a multiplication operation is specified by using the matrix read pointer increment, so that an all-zero matrix element row may be skipped by setting the vector read pointer increment, to reduce data scheduling signaling of the multiplication operation and improve data processing efficiency.

With reference to the sixth possible implementation of the first aspect or the seventh possible implementation of the first aspect, in an eighth possible implementation, the reading, from input vector data based on the second indication information, a vector element value of a second location mark code corresponding to the first location mark code includes:
searching the input vector data for a to-be-read vector data row based on the second indication information, where the input vector data includes T*K elements, and T is an integer greater than 1; and
reading, from the vector data row, the vector element value of the second location mark code corresponding to the first location mark code.

In this application, the input vector data greater than the quantity of matrix elements is searched for the to-be-read vector data row by using indication information of the vector read pointer, and the vector element value corresponding to the read matrix element value is read from the found vector data row. In this application, more vector data is input, to ensure effective utilization of an operation operator in an accelerator, and improve applicability of a matrix and vector multiplication operation.

With reference to any one of the sixth possible implementation of the first aspect to the eighth possible implementation of the first aspect, in a ninth possible implementation, the method further includes:
updating the vector read pointer based on the vector read pointer increment, to obtain a vector read pointer of the next calculation.

In this application, the vector read pointer may be updated by using the vector read pointer increment, to ensure accuracy of the vector data row to which the vector read pointer points in each operation, improve accuracy of data scheduling, and improve applicability.

A second aspect provides a matrix and vector multiplication operation apparatus. The apparatus may include a memory, a scheduling unit, and an arithmetic logical unit, where
the memory is configured to store a preset matrix and first indication information of a matrix element of the preset matrix, where the first indication information is used to indicate a non-zero element in the preset matrix;
the scheduling unit is configured to: obtain the first indication information from the memory, read a matrix element value of the non-zero element from the preset matrix based on the first indication information, and determine a first location mark code of the read matrix element value, where the first location mark code is a location mark of the matrix element value in matrix data that is obtained through a single read;
the memory is further configured to store input vector data and second indication information of a vector element of the input vector data, where the second indication information is used to indicate to-be-read vector data information;
the scheduling unit is further configured to: read the second indication information from the memory, and read, from the input vector data based on the second indication information, a vector element value of a second location mark code corresponding to the first location mark code; and
the arithmetic logical unit is configured to calculate a multiplication operation value of the matrix element value and the vector element value that are read by the scheduling unit.

With reference to the second aspect, in a first possible implementation, the multiplication operation apparatus further includes:
a general purpose processor, configured to: obtain a to-be-processed matrix, and perform location marking on each matrix element in the to-be-processed matrix to obtain a pre-mark code of each matrix element, where each row of the to-be-processed matrix includes K elements, and K is an integer greater than 0;
the general purpose processor is further configured to: select a non-zero element in the to-be-processed matrix, generate the preset matrix based on a pre-mark code of the non-zero element in the to-be-processed matrix, and store the preset matrix to the memory, where each row of the preset matrix includes K non-zero elements; and
the general purpose processor is further configured to: generate the first indication information of the matrix element based on the preset matrix and pre-mark codes of various non-zero elements included in the preset matrix, and store the first indication information to the memory.

With reference to the first possible implementation of the second aspect, in a second possible implementation, the general purpose processor is further configured to:
process, based on a preset size of matrix data that is read during current calculation, the pre-mark codes of the various non-zero elements included in the preset matrix, to obtain location mark codes of the various non-zero elements; and add the location mark codes of the various non-zero elements to the first indication information, where
a location mark code of any one of the various non-zero elements is less than the size of the data.

With reference to the first possible implementation of the second aspect or the second possible implementation of the second aspect, in a third possible implementation, the first indication information includes a matrix read pointer, a matrix valid pointer, and a quantity of valid matrix elements;
the matrix read pointer is used to indicate a to-be-read matrix element row that participates in the current calculation in the preset matrix;
the matrix valid pointer points to a location of a start non-zero element that participates in the current calculation in the to-be-read matrix element row;
the quantity of valid matrix elements is used to indicate a quantity M of to-be-read non-zero elements that participate in the current calculation, and M is an integer greater than or equal to 1; and
the scheduling unit is configured to:
search the preset matrix for a specified matrix element row to which the matrix read pointer points, and read, starting from a specified location to which the matrix valid pointer points, M matrix element values from the specified matrix element row.

With reference to the third possible implementation of the second aspect, in a fourth possible implementation, the first indication information further includes a matrix read pointer increment;
an initial value of the matrix read pointer increment is zero, indicating that a to-be-read matrix element row in the current calculation is a matrix element row indicated by the matrix read pointer; and
the general purpose processor is configured to:
if M is greater than a quantity of remaining non-zero elements in the to-be-read matrix element row, increase the matrix read pointer increment by 1, where increasing the matrix read pointer increment by 1 indicates that a to-be-read matrix element row in next calculation is two rows after the matrix element row indicated by the matrix read pointer, and
the remaining non-zero elements are non-zero elements that are included in the to-be-read matrix element row and that are after the location to which the matrix valid pointer points.

With reference to the third possible implementation of the second aspect, in a fifth possible implementation, the general purpose processor is further configured to:
update the matrix read pointer based on the matrix read pointer increment, to obtain a matrix read pointer of the next calculation.

With reference to any one of the first possible implementation of the second aspect to the fifth possible implementation of the second aspect, in a sixth possible implementation, the to-be-read vector data information includes a to-be-read vector data row in the current calculation; and
the general purpose processor is further configured to:
determine, based on the pre-mark code of the non-zero element in the to-be-processed matrix, a quantity of non-zero elements included in each matrix element row in the to-be-processed matrix; and generate the second indication information of the vector element based on the quantity of non-zero elements included in each matrix element row, where
the second indication information includes a to-be-read vector data row indicated by a vector read pointer and a vector read pointer increment; and
the vector read pointer increment indicates a quantity of rows spaced between a to-be-read vector data row of the next calculation and a vector data row indicated by the vector read pointer.

With reference to the sixth possible implementation of the second aspect, in a seventh possible implementation, the general purpose processor is configured to:
if the quantity of non-zero elements included in each matrix element row is not zero, set the vector read pointer increment to H, where H is a ratio of the preset size of the matrix data that is read during the current calculation to K; or
if a quantity H₁ of matrix element rows whose quantity of non-zero elements included is zero is greater than H, set the vector read pointer increment to H₁.

With reference to the sixth possible implementation of the second aspect or the seventh possible implementation of the second aspect, in an eighth possible implementation, the scheduling unit is configured to:
search the input vector data for a to-be-read vector data row based on the second indication information, where the input vector data includes T*K elements, and T is an integer greater than 1; and
read, from the vector data row, the vector element value of the second location mark code corresponding to the first location mark code.

With reference to any one of the sixth possible implementation of the second aspect to the eighth possible implementation of the second aspect, in a ninth possible implementation, the general purpose processor is further configured to:
update the vector read pointer based on the vector read pointer increment, to obtain a vector read pointer of the next calculation.

In this application, information such as the matrix read pointer, the matrix valid pointer, the quantity of valid matrix elements, and the matrix read pointer increment is used to indicate the non-zero element in the to-be-processed matrix, and the non-zero element value is read from the preset matrix, to perform a multiplication operation on the read non-zero element value and a vector data value, so as to improve scheduling accuracy of the matrix element, reduce an operation such as non-zero determining of a matrix element before scheduling of the matrix element value, and reduce scheduling operation complexity of the matrix element. In this application, the vector data value corresponding to a location of the matrix element value may be read from the input vector data based on indication information such as the vector read pointer and the vector read pointer increment, to reduce a matrix element value determining operation in a multiplication operation process, so as to reduce data processing complexity, reduce data processing power consumption, and improve data processing efficiency. In this application, location marking may be further performed on the matrix element of the preset matrix based on a size of data obtained through a single read, to ensure that a bit width of the mark code is fixed, and reduce data processing operation complexity.

### DESCRIPTION OF DRAWINGS

FIG. 1 is a schematic diagram of a matrix and vector multiplication operation according to an embodiment of the present invention;
FIG. 2 is a schematic structural diagram of a matrix and vector multiplication operation apparatus according to an embodiment of the present invention;
FIG. 3 is a schematic flowchart of a matrix and vector multiplication operation method according to an embodiment of the present invention;
FIG. 4 is a schematic diagram of preprocessing a sparse matrix;
FIG. 5 is a schematic diagram of obtaining a location mark code of a matrix element according to an embodiment of the present invention;
FIG. 6A to FIG. 6C are schematic diagrams of indication information of a matrix/vector read pointer according to an embodiment of the present invention;
FIG. 7 is a schematic architectural diagram of a PE according to an embodiment of the present invention; and
FIG. 8 is a schematic structural diagram of a matrix and vector multiplication operation apparatus according to an embodiment of the present invention.

### DESCRIPTION OF EMBODIMENTS

The following describes the embodiments of the present invention with reference to the accompanying drawings in the embodiments of the present invention.

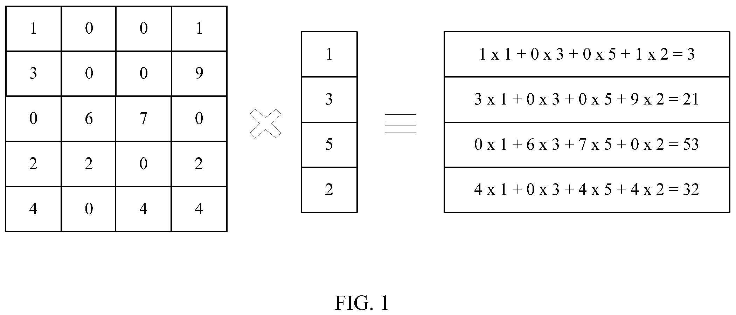

FIG. 1 is a schematic diagram of a matrix and vector multiplication operation according to an embodiment of the present invention. As shown in FIG. 1, it is assumed that a to-be-processed matrix that participates in a multiplication operation is a matrix of A*B, and input vector data that participates in the multiplication operation is a vector of B*1. The matrix of A*B and the vector of B*1 may be multiplied to obtain a vector of A*1. That is, the to-be-processed matrix is a matrix of A rows and B columns, and the to-be-processed matrix includes one or more zero elements. The input vector data is a vector of B columns. In the matrix and vector multiplication operation, matrix elements in each row of the matrix are paired with vector elements, two elements in each pair are multiplied, these products are then accumulated, and a value that is finally obtained is a result of a first row. For example, matrix elements of a first row in the to-be-processed matrix are paired with vector elements, for example, (1, 1), (0, 3), (0, 5), and (1, 2), then, two elements in each pair are multiplied to obtain a product of each pair, so that products are accumulated to obtain a result of the first row. A same operation is performed on the matrix elements of each row, and then a vector of 4*1 may be obtained.

To accelerate a multiplication operation of a sparse matrix (that is, a matrix including a 0 element, for example, the matrix in FIG. 1) and a vector, in the prior art, the sparse matrix is densified (to be specific, the 0 element in the matrix is discarded, and remaining non-zero elements are used to regenerate a matrix), to reduce data storage space and reduce a quantity of matrix elements that participate in the multiplication operation. However, in the prior art, after densification processing is performed on the matrix, a multiplication operation of a matrix obtained after the densification processing and a vector becomes more complex. For example, the matrix obtained after the densification processing needs to record a mark code and a value of each matrix element, and the mark code indicates a location of the matrix element in the matrix. For example, a mark code of a first element in the first row in FIG. 1 may be 1, and a mark code of a second element in the first row is 2. By analogy, a mark code of a first element in a second row is 4, a mark code of a last element in a last row is 20, and the like. In the matrix and vector multiplication operation, an element needs to be read from the matrix, to determine whether a read element value is 0. If the read element value is 0, the read element value is discarded. If the read element value is not 0, the element value and a mark code of the element value are recorded.

In addition, in the prior art, in the matrix and vector multiplication operation, in a process of reading the matrix element, it is further required to determine whether there are enough arithmetic logical units to perform an operation. If there are no enough arithmetic logical units to perform the operation, a specific element that is read in a current operation needs to be recorded, and during a next operation, the read needs to start from an element following the recorded element. If operations on all elements that are of a matrix element row and that are read in the current operation are completed, an element in a new row is read. In the prior art, a relatively large amount of data needs to be determined in the process of reading the matrix element, operations are complex, and applicability is low. In the prior art, in the matrix and vector multiplication operation, a vector element corresponding to a recorded non-zero element may be selected based on the recorded non-zero element, and is multiplied by. To be specific, before the densification processing, a vector element paired with the non-zero element is the vector element corresponding to the non-zero element. If a span of the vector element is too large, a location of a next vector element in a memory needs to be found.

It can be learned from the foregoing that a large quantity of complex determining operations need to be used in a process of performing the multiplication operation on the sparse matrix and the vector in real time, and a read mark code and a read value need to be stored. Consequently, operations are complex, and applicability is low. The embodiments of the present invention provide a matrix and vector multiplication operation method and apparatus. A set of control signals for a matrix and vector multiplication operation is generated by using software and a characteristic that a matrix is known data, and the set of control signals is used to select correct data from matrix data and vector data, to perform the multiplication operation. In an implementation provided in the embodiments of the present invention, in a matrix and vector multiplication operation process, the multiplication operation apparatus only needs to perform a corresponding operation based on a control signal, and does not need to perform an operation such as data determining or real-time recording. Operations are simple, and data processing efficiency is high. In the implementation provided in the embodiments of the present invention, the control signals of the multiplication operation need to be generated only once. Then, all operations of the multiplication operation apparatus may be triggered and performed by using the control signals, and real-time determining and data recording are not required. This can reduce scheduling complexity of the matrix element and improve data processing efficiency.

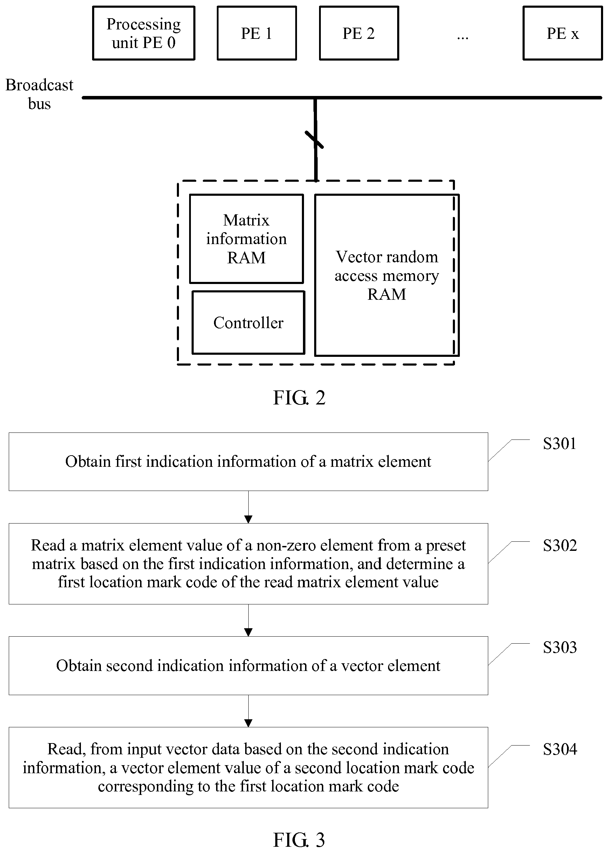

FIG. 2 is a schematic structural diagram of a matrix and vector multiplication operation apparatus according to an embodiment of the present invention. The multiplication operation apparatus provided in this embodiment of the present invention may be specifically a multiplication operation accelerator. A top-layer architecture of the multiplication operation accelerator shown in FIG. 2 includes x process engines (process engine, PE), a vector random access memory (random access memory, RAM), a matrix information RAM, a controller, and the like. Each PE further includes a matrix RAM, configured to store a matrix that participates in a multiplication operation. Each PE performs a floating-point multiply-accumulate (floating-point multiply-accumulate, FMAC) operation. The following provides description by using an example in which a single PE (any PE) performs the FMAC.

The matrix information RAM, the matrix RAM, and the vector RAM all include one write port and two read ports. In each multiplication operation, reading data from the matrix RAM and the vector RAM is reading data of an L^{th} row and an (L+1)^{th} row from the matrix RAM and the vector RAM at the same time. Each row of the matrix RAM and the vector RAM stores K elements (a row of the matrix RAM further stores a location mark code corresponding to each element). An output width of the matrix RAM is K elements. To be specific, the output width of the matrix RAM indicates a quantity (that is, K) of elements that are read from the matrix RAM by each PE in a single operation, and an output width of the vector RAM is T*K elements. T may be a predefined multiple, and may be specifically determined based on a percentage of zero elements included in the matrix that participates in the operation in all elements included in the matrix. This is not limited herein.

It should be noted that, because the matrix stored in the matrix RAM may be a densified matrix, the matrix may not include a zero element, that is, K elements in a row of data that is read from the matrix RAM by the PE in the single operation may be K non-zero elements after the zero element is removed. Therefore, the actually read K matrix elements may include a matrix element whose mark code is greater than K. In this case, more than K vector elements paired with the actual K non-zero matrix elements are needed, a vector element is real-time input data, and the vector RAM is data on which densification processing is not performed, so that data output by the vector RAM should be more than K. For example, it is assumed that K is 8. Before the densification processing, there are four zero elements in 16 (that is, 2K) pieces of data included in the data of the L^{th} row and the (L+1)^{th} row of the matrix. Elements included in the L^{th} row are (2, 4, 3, 0, 5, 0, 1, 0), elements included in the (L+1)^{th} row are (7, 6, 9, 0, 8, 2, 1, 4), and K non-zero elements read after the densification processing may be (2, 4, 3, 5, 1, 7, 6, 9). In this case, the K non-zero elements read after the densification processing include the data of the L^{th} row and the (L+1)^{th} row. Before the densification processing, a matrix element and a vector element that participate in the multiplication operation are pairwise. The vector element is input raw data, and the densification processing is not performed. Therefore, there should be more than K vector elements to be read in this case, and a vector element in the (L+1)^{th} row is paired with a matrix element whose mark code is greater than K, to ensure that the vector elements paired with the K non-zero matrix elements are read. To be specific, when there are a large quantity of zero elements in the matrix, if only K vector elements are selected, it is difficult to effectively use all operation operators in the PE. If T*K (T>1) vector elements are selected, it indicates that a value range of the vector element may be greater, so that more non-zero elements can be more easily selected to participate in the FMAC operation, thereby increasing utilization of a multiplier inside the PE.

Two operands in the FMAC operation are the matrix element and the vector element. The matrix element is preprocessed and stored in the matrix RAM in the PE. The vector element may be stored in a large RAM at a far end, and is input into the PE as the real-time input data to participate in the FMAC operation. When the operation starts, the vector RAM broadcasts T*K elements to a bus. T may be user-defined herein. For ease of understanding in this embodiment of the present invention, T=2 is used as an example for description. In addition, matrix information of each PE stored in the matrix information RAM is sent to each PE by using the broadcast bus. After the vector element and the matrix information enter the PE, the PE extracts, based on the matrix information, an element corresponding to a vector, to perform a multiply-accumulate operation on the vector and the element. With reference to FIG. 3, the following describes a specific implementation of reading the matrix element and the vector element and the multiply-accumulate operation provided in an embodiment of the present invention. An execution body of a matrix and vector multiplication operation method provided in this embodiment of the present invention may be the foregoing PE, may be a functional module in the PE, may be the foregoing controller, or the like. This is not limited herein. The following provides description by using an example in which the PE is the execution body.

FIG. 3 is a schematic flowchart of a matrix and vector multiplication operation method according to an embodiment of the present invention. The method provided in this embodiment of the present invention may include the following steps.

In some feasible implementations, before an FMAC operation starts, a to-be-processed matrix that participates in the FMAC operation may be obtained, and the to-be-processed matrix is preprocessed to obtain matrix initialization information. Specifically, location marking may be performed on each matrix element in the to-be-processed matrix to obtain a pre-mark code of each matrix element. Each row of the to-be-processed matrix includes K elements, and K is an integer greater than 0. For example, it is assumed that the to-be-processed matrix is a sparse matrix of 5*8, that is, K=8, as shown in Table 1.

**Table 1**

| | | | | | | | |
|---|---|---|---|---|---|---|---|
| 12 | 0 | 0 | 4 | 0 | 5 | 0 | 1 |
| 0 | 0 | 2 | 5 | 0 | 0 | 23 | 0 |
| 2 | 0 | 0 | 9 | 23 | 4 | 13 | 0 |
| 0 | 0 | 18 | 21 | 0 | 0 | 0 | 0 |
| 0 | 0 | 0 | 0 | 0 | 0 | 0 | 0 |

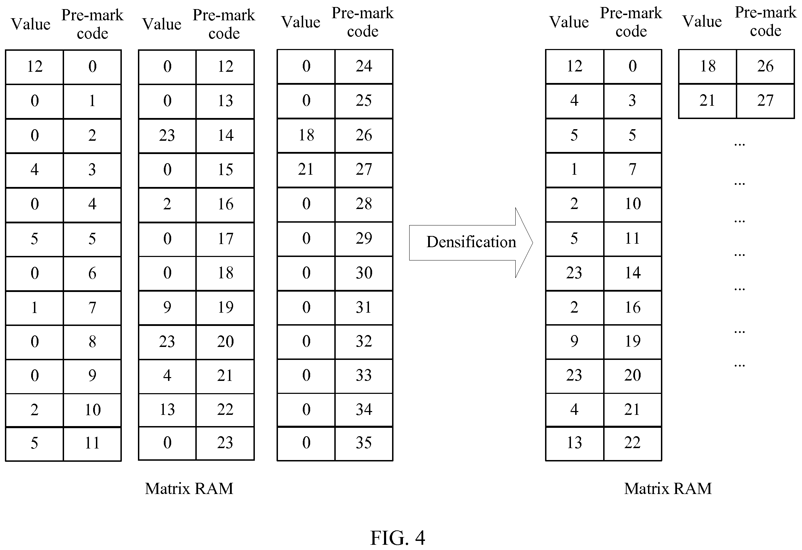

A PE may mark each matrix element in a column-after-row manner based on a location of each matrix element in the to-be-processed matrix, to obtain the pre-mark code of each matrix element. FIG. 4 is a schematic diagram of preprocessing a sparse matrix. Data on a left side of a "densification" arrow in FIG. 4 is a matrix element included in the to-be-processed matrix and a pre-mark code corresponding to the matrix element. Further, the PE may select a non-zero element from the to-be-processed matrix, and generate a preset matrix based on a pre-mark code of the non-zero element. The preset matrix is a matrix obtained after the densification processing is performed on the to-be-processed matrix, the preset matrix does not include a zero element, and each row of the preset matrix also includes K elements. Data on a right side of the "densification" arrow in FIG. 4 is the non-zero element in the to-be-processed matrix and the pre-mark code corresponding to the non-zero element. It should be noted that data shown in FIG. 4 is obtained by processing matrix data shown in Table 1, and data that is not shown may be obtained through processing based on the shown data. This is not limited herein.

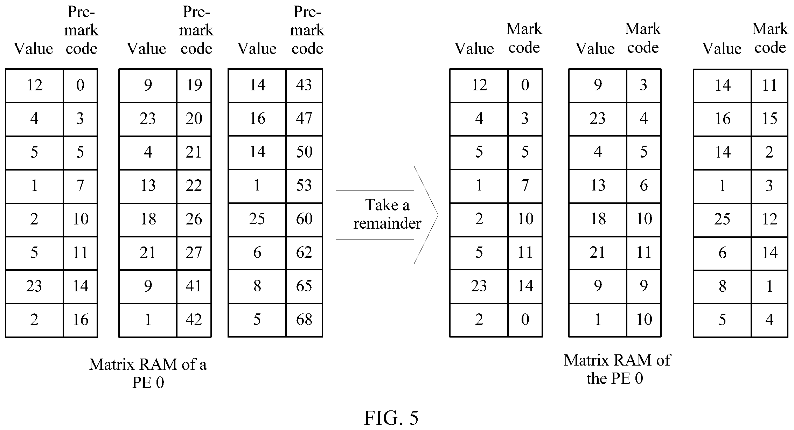

Further, in some feasible implementations, the PE may process, based on a preset size (for example, 2K) of data that is read during a single operation (for example, current calculation), the pre-mark code of each non-zero element included in the preset matrix, to obtain a location mark code (namely, a first location mark code) of each non-zero element. To be specific, for a pre-mark code greater than K, an actual mark code (namely, the first location mark code) of the matrix element is obtained by taking a remainder of the pre-mark code divided by 2K. Then, a processed matrix element and a location mark code corresponding to the processed matrix element may be stored in a matrix RAM of the PE. FIG. 5 is a schematic diagram of obtaining a location mark code of a matrix element according to an embodiment of the present invention. A PE 0 is used as an example, and a pre-mark code of each non-zero element in the preset matrix may be processed to obtain a location mark code of each non-zero element. In this embodiment of the present invention, a location mark code of each non-zero matrix element is obtained by taking a remainder of a pre-mark code of each matrix element divided by 2K, so that the location mark code of each non-zero matrix element is not greater than 2K, and a bit width of the location mark code of the non-zero matrix element is fixed, to reduce storage space of the location mark code and improve data processing applicability.

It should be noted that, because matrix data that is obtained through a single read is 2K, the actual mark code obtained after taking the remainder of the pre-mark code that is greater than K and that is divided by 2K may be a location mark of the matrix element in the matrix data that is obtained through the single read. For example, 16 matrix elements, in other words, 16 matrix elements whose pre-mark codes are 0 to 15, are obtained through a single read, and a matrix element whose pre-mark code is 15 represents data of the matrix element at a location whose mark number is 15 in the 16 matrix elements. If 16 matrix elements that are obtained through a single read during a first operation are 16 matrix elements whose pre-mark codes are 16 to 31, actual mark codes of the 16 matrix elements whose pre-mark codes are 16 to 31 are 0 to 15, and a matrix element whose pre-mark code is 31 represents data of the matrix element at a location whose mark number is 15 in the 16 matrix elements that are read this time.

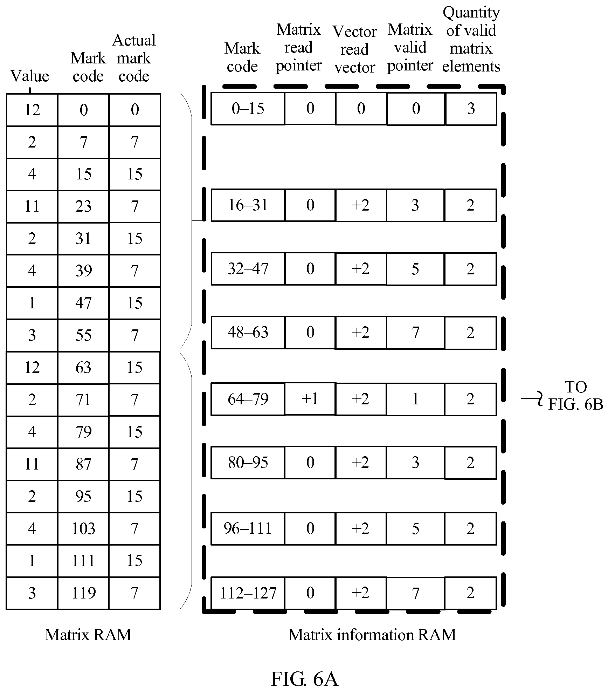

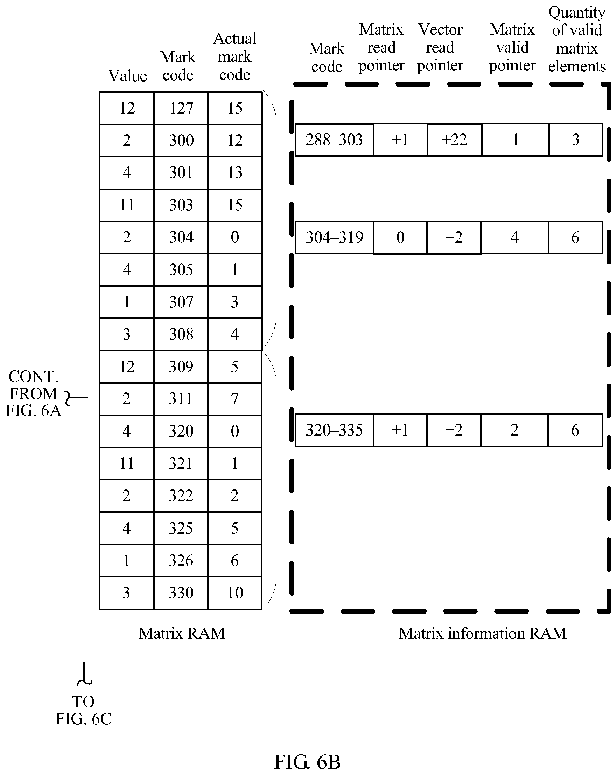

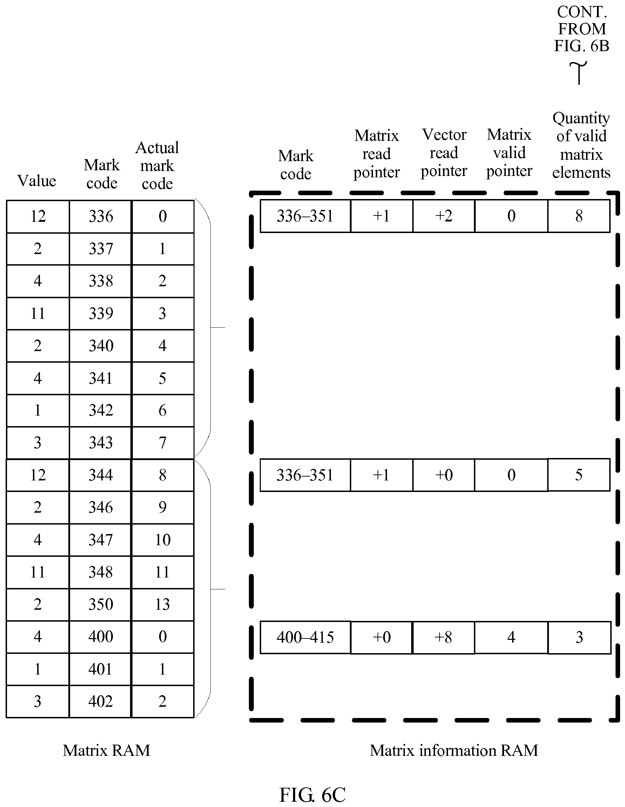

In some feasible implementations, after the to-be-processed matrix is processed to obtain the preset matrix, first indication information of a matrix element of the preset matrix may be further generated based on the pre-mark code of each non-zero element in the preset matrix. The first indication information may include a matrix read pointer, a matrix valid pointer, a quantity of valid matrix elements, and the like. FIG. 6A to FIG. 6C are schematic diagrams of indication information of a matrix/vector read pointer according to an embodiment of the present invention. A mark code is the pre-mark code described in this embodiment of the present invention. In specific implementation, it is assumed that K is 8, and data read during a single operation is 16 (namely, 2K) pieces of data. When the first indication information of the matrix element of the preset matrix is generated, every 16 matrix elements of the preset matrix may be grouped into one group based on a pre-mark code of each matrix element of the preset matrix, for example, matrix elements whose pre-mark codes are 0 to 15 are one group, and matrix elements whose pre-mark codes are 16 to 21 are one group. Further, the quantity of valid matrix elements may be determined based on a quantity of non-zero elements included in each group of matrix elements. For example, there are three non-zero elements in the group of matrix elements whose pre-mark codes are 0 to 15, and therefore, the quantity of valid matrix elements is 3.

The matrix read pointer is used to indicate a to-be-read matrix element row that participates in the current calculation in the preset matrix. For example, a matrix read pointer corresponding to the group of matrix elements whose pre-mark codes are 0 to 15 is 0, indicating that matrix element rows read by the matrix read pointer are a current row and a next row (that is, two rows are read each time) during the first operation, for example, a first row and a second row of the preset matrix.

The matrix valid pointer points to a location of a start non-zero element that participates in the current calculation in the to-be-read matrix element row. For example, a matrix valid pointer corresponding to the group of matrix elements whose pre-mark codes are 0 to 15 is 0, indicating that the read of the to-be-read matrix element starts from an element whose actual mark code is 0 in the first row of the preset matrix. The quantity of valid matrix elements is used to indicate a quantity M of to-be-read non-zero elements that participate in the current calculation, that is, a quantity of elements that can be multiplied, and is also used to indicate a valid element that can be read within a range of [i*k,(i+2)*k], where i is an integer greater than or equal to 0, and data within the range [i*k,(i+2)*k] of the to-be-processed matrix is two rows of data. For example, when i is 0 and K is 8, [i*k,(i+2)*k] indicates two rows of data whose pre-mark codes are 0 to 15. The quantity of valid matrix elements indicates a quantity of valid elements within the range, for example, three.

It is assumed that matrix elements that are read during a second operation are a group of matrix elements whose pre-mark codes are 16 to 31, there are two non-zero elements in the group of elements (for example, two matrix elements whose mark codes are 23 and 31 shown in FIG. 6A to FIG. 6C), and therefore, the quantity of valid matrix elements is 2. A matrix read pointer corresponding to the group of matrix elements whose pre-mark codes are 16 to 31 is 0, indicating that matrix element rows read by the matrix read pointer are a current row and a next row, for example, the first row and the second row of the preset matrix. It should be noted that the first row of the preset matrix includes eight non-zero matrix elements, and three non-zero matrix elements are read during the first operation. Therefore, the matrix read pointer is still 0 in the second operation, that is, the read still starts from the first row. In this case, a matrix valid pointer corresponding to the group of matrix elements whose pre-mark codes are 16 to 31 is 3, indicating that the read of the to-be-read matrix element starts from an element whose actual mark code is 3 in the first row of the preset matrix, that is, the read starts from a fourth matrix element in the first row of the preset matrix, and two matrix elements are read this time. The quantity of valid matrix elements is used to indicate that a quantity M of to-be-read non-zero elements that participate in the current calculation is 2.

It is assumed that matrix elements that are read during a fifth operation are a group of matrix elements whose pre-mark codes are 64 to 79, there are two non-zero elements in the group of elements (for example, two matrix elements whose mark codes are 71 and 79 shown in FIG. 6A to FIG. 6C), and therefore, the quantity of valid matrix elements is 2. A matrix read pointer corresponding to the group of matrix elements whose pre-mark codes are 64 to 79 is +1 (that is, a matrix read pointer increment is 1), indicating that matrix element rows read by the matrix read pointer are a next row and a lower row of a to-be-read matrix element row to which the matrix read pointer points, for example, the second row and a third row of the preset matrix. It should be noted that the first row of the preset matrix includes eight non-zero matrix elements, and nine matrix elements are read during the first four operations, in other words, 3+2+2+2. The nine matrix elements include the eight matrix elements in the first row of the preset matrix and a first matrix element in the second row. Therefore, in the fifth operation, the matrix read pointer is +1, that is, the read starts from a next row of the first row. In this case, a matrix valid pointer corresponding to the group of matrix elements whose pre-mark codes are 64 to 79 is 1, indicating that the read of the to-be-read matrix element starts from an element whose actual mark code is 1 in the second row of the preset matrix, that is, the read starts from a second matrix element in the second row of the preset matrix, and two matrix elements are read this time. The quantity of valid matrix elements is used to indicate that a quantity M of to-be-read non-zero elements that participate in the current calculation is 2.

In the foregoing manner, first indication information that is of a matrix element and that is corresponding to each group of matrix elements, such as a matrix read pointer, a matrix valid pointer, and a quantity of valid matrix elements, is generated.

As shown in FIG. 6A to FIG. 6C, in this embodiment of the present invention, the first indication information of the matrix element further includes the matrix read pointer increment. An initial value of the matrix read pointer increment is zero, indicating that a to-be-read matrix element row in the current calculation is a matrix element row indicated by the matrix read pointer (two rows are read each time, and the read starts from a row to which the matrix read pointer points). If a quantity of non-zero matrix elements to be read in the current calculation is greater than a quantity of remaining non-zero matrix elements included in the matrix element row indicated by the matrix read pointer, the matrix read pointer increment in this operation is 1, and is used to obtain a matrix read pointer of a next operation through updating. To be specific, if the quantity M of matrix elements read in the current calculation is greater than the quantity of remaining non-zero elements in the matrix element row to which the matrix read pointer points, the matrix read pointer increment is increased by 1. Increasing the matrix read pointer increment by 1 indicates that to-be-read matrix element rows read in next calculation are two rows after the matrix element row indicated by the matrix read pointer of the current operation. The remaining non-zero elements are non-zero elements that are included in the matrix element row indicated by the matrix read pointer of the current operation and that are after the location to which the matrix valid pointer points. For example, in a fourth operation, in the first row of the preset matrix, there is 0 element (that is, fewer than two elements) after a non-zero element whose location mark code is 7 and to which the matrix valid pointer points. Therefore, a matrix read pointer increment correspondingly generated after the fourth operation is 1, indicating that the matrix read pointer points to the second row of the matrix in the fifth operation. After the fourth operation, the matrix read pointer may be updated based on the foregoing matrix read pointer increment, to obtain a matrix read pointer of the fifth operation.

S301. Obtain first indication information of a matrix element.

In some feasible implementations, the first indication information of the matrix element in FIG. 6A to FIG. 6C may be stored in the foregoing matrix information RAM. When performing the FMAC operation, the PE may obtain, from a broadcast bus, the first indication information sent by the foregoing matrix information RAM, so as to read, from the preset matrix based on the first indication information, a non-zero element (that is, a non-zero matrix element) required for performing the FMAC operation.

In specific implementation, the first indication information may be matrix indication information obtained after initializing the to-be-processed matrix, and is stored in the matrix information RAM. When performing the FMAC operation, the PE may obtain the matrix indication information from the broadcast bus, and schedule, based on parameters such as the matrix read pointer, the matrix valid pointer, and the quantity of valid matrix elements and included in the matrix indication information, the non-zero element required for performing the FMAC operation in the preset matrix.

Matrix data such as the to-be-processed matrix described in this embodiment of the present invention is known data, and the known data is not changed. Therefore, initialization information of the matrix is obtained by preprocessing the to-be-processed matrix, and a multiplication arithmetic logical unit may be guided by using the initialization information, to perform each beat of data scheduling and operation. One beat of data scheduling and operation may be data scheduling and an operation in a processing period. This can improve data operation processing efficiency and reduce operation complexity of a matrix and vector multiplication operation.

S302. Read a matrix element value of a non-zero element from a preset matrix based on the first indication information, and determine a first location mark code of the read matrix element value.

In some feasible implementations, the PE may search, based on the first indication information, the preset matrix for a specified matrix element row to which the matrix read pointer points, and read, starting from a specified location to which the matrix valid pointer points, M matrix element values from the specified matrix element row. For example, during a first FMAC operation, the read of matrix element values of three non-zero elements may start from a first matrix element location of the first row of the preset matrix based on the matrix read pointer. Further, a location mark code (that is, the first location mark code) of the read matrix element value may be further determined, so as to read, from an input vector element, a vector element paired with the location mark code. For example, a matrix element value of a first non-zero element of the preset matrix is read. Then, a location mark code of the matrix element value may be determined, so that a first element value paired with the location mark code in the multiply-accumulate operation may be read from vector data.

S303. Obtain second indication information of a vector element.

In some feasible implementations, when the to-be-processed matrix is preprocessed to obtain the initialization information of the to-be-processed matrix, indication information (that is, the second indication information) of the vector data may be further determined based on a quantity of non-zero elements included in each matrix element row in the to-be-processed matrix. In specific implementation, in this embodiment of the present invention, a vector read pointer is used to indicate a to-be-read vector data row. The second indication information includes the to-be-read vector data row indicated by a vector read pointer and further includes a vector read pointer increment. It should be noted that, in the matrix and vector multiplication operation, read vector data needs to be paired with the matrix data. Therefore, when a size of matrix data obtained through a single read is 2K (that is, two rows), a size of vector data obtained through a single read should also be 2K, so that the vector read pointer increment may be set to a quantity of vector RAM rows that are spaced by vector elements output through two beats. To be specific, the vector read pointer increment indicates a quantity of rows spaced between a to-be-read vector data row of the next calculation and a vector data row indicated by the vector read pointer in the current calculation, and the vector data row indicated by the vector read pointer is a vector data row read this time. In specific implementation, if elements included in each matrix element row in the to-be-processed matrix are not all zeros, the vector read pointer increment may be set to 2, that is, a ratio H of a size (2K) of data read this time to K is 2. If elements included in each matrix element row of the to-be-processed matrix are all zeros, the elements may be directly skipped, that is, a matrix element row of all zeros does not need to participate in the multiplication operation. In this case, the vector read pointer increment may be set to a quantity of rows that need to be skipped. If elements within a range [i*k,(i+2)*k] in the to-be-processed matrix are all zeros, 2 rows may be directly skipped. In this case, the vector read pointer increment may be set to 2 or 4. That is, H₁ is 2. If elements within a continuous range [i*k,(i+*N*)*k] are all zeros in the to-be-processed matrix, N rows may be directly skipped. In this case, the vector read pointer increment may be set to N. As shown in FIG. 6A to FIG. 6C, it can be learned, based on a mark code of each matrix element in the to-be-processed matrix, that elements between a mark code 127 and a mark code 300 are all zeros, and the elements between the mark code 127 and the mark code 300 are spaced by 22 rows. Therefore, the vector read pointer increment may be set to 22. If an element interval between a mark code C and a mark code D is less than 2K, the vector read pointer increment is set to 2. For details, refer to the example shown in FIG. 6A to FIG. 6C. Details are not described herein again.

It should be noted that the indication information of the vector may be obtained through preprocessing and stored in a vector RAM, so that the indication information of the vector can be transmitted to the PE by using the broadcast bus when the PE performs the FMAC operation. After each time the data is read, the vector read pointer increment may be used to update the vector read pointer to obtain a vector read pointer of next calculation, so that accurate scheduling of the vector data can be implemented.

S304. Read, from input vector data based on the second indication information, a vector element value of a second location mark code corresponding to the first location mark code.

In some feasible implementations, after reading the matrix element value from the preset matrix and determining the first location mark code of the read matrix element value, the PE may search, based on the second indication information of the vector element, the input vector data for the vector data row indicated by the vector read pointer, and read, from the vector data row, the vector element value of the second location mark code corresponding to the first location mark code. The second location mark code corresponding to the first location mark code is a location of a matrix element value that is paired with a matrix element value on the second location mark code. The input vector data may be an output width of the vector RAM, and may be specifically T*K elements, and T is an integer greater than 1. To be specific, if an output width of the matrix RAM is K non-zero elements, the vector RAM may output T*K elements, to ensure that enough vector elements are paired with the matrix elements, and improve accuracy of a matrix and vector multiplication operation.

S305. Obtain a multiplication operation value of the matrix element value and the vector element value.

In some feasible implementations, after obtaining the matrix element value and the vector element value, the PE may perform a multiply-accumulate operation on the matrix element value and the vector element value, so as to obtain the multiplication operation value of the matrix element value and the vector element value.

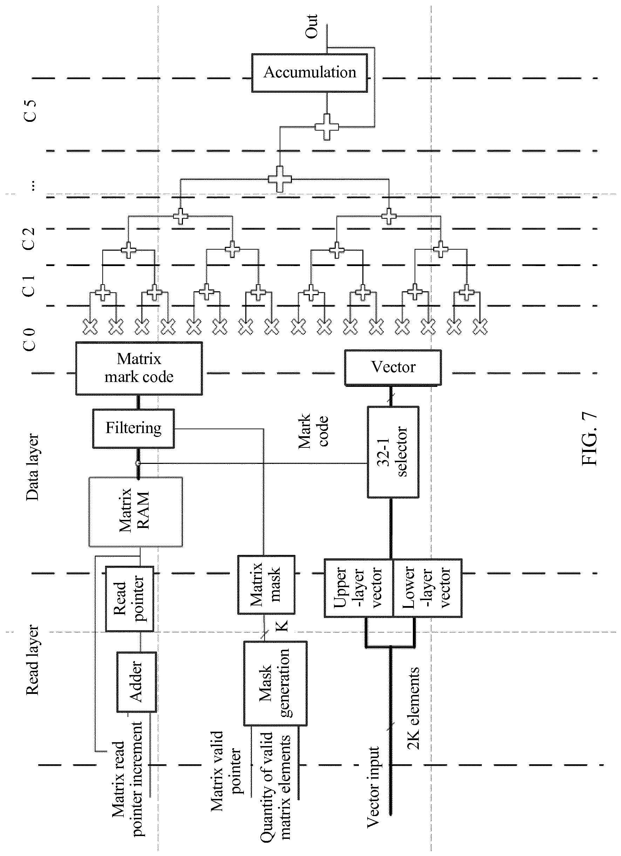

FIG. 7 is a schematic architectural diagram of a PE. A process in which the PE performs data scheduling and a multiply-accumulate processing operation based on indication information of a matrix element stored in a matrix information RAM and indication information of a vector element stored in a vector RAM is briefly described below with reference to FIG. 7. As shown in FIG. 7, each PE actually performs an FMAC operation. A structure of the PE may be divided into 2+N layers of pipelines through pipelining processing. The PE includes two layers of data scheduling pipelines (including a read layer and a data layer) and N layers of operation pipelines (that is, an operation layer), such as C 0, C 1, ..., and C 5.

At the read layer, an adder updates a matrix read pointer based on the matrix read pointer returned by a matrix RAM and a matrix read pointer increment transmitted by a broadcast bus. In addition, the PE may maintain a matrix mask register, and generate, by using indication information such as a matrix valid pointer and a quantity of valid matrix elements that is input from the matrix information RAM by using the broadcast bus, a mask that can be used to filter out a matrix element that has been calculated. Further, the matrix element that has been calculated may be filtered, by using the mask of the matrix element, out of data that is read from a preset matrix stored in the matrix RAM, that is, a valid matrix element that participates in a current FAMC operation is selected, based on the matrix valid pointer and the quantity of valid matrix elements, from matrix elements output from the matrix RAM, and then the valid matrix element in the preset matrix may be input to the operation pipeline.

In addition, in this processing period, a vector input (that is, input vector data) is also input from outside and stored in the vector RAM. A vector read pointer and a vector read pointer increment may alternatively be stored in the vector RAM in advance. This is not limited herein. The input vector data may include 2K elements, and may be divided into an upper-layer vector and a lower-layer vector. The PE may read the input vector data from the vector RAM, select, by using a 32-1 selector, a corresponding vector element value from the input vector data based on information such as a pre-mark code of a matrix element value transmitted by the matrix RAM, and input the corresponding vector element value to the operation pipeline for performing a matrix and vector multiplication operation.

At the data layer, matrix data may be read from the matrix RAM. Valid matrix elements are obtained after filtering is performed, and K or less than K valid matrix elements in the preset matrix are input to the operation layer. In addition, a corresponding vector element may be selected by a plurality of selectors (the 32-1 selector shown in the figure) based on the pre-mark code read from the matrix RAM, and input to the operation layer. Each of the plurality of selectors may select one vector element from the 2K elements, and the vector element is corresponding to a matrix element corresponding to the pre-mark code. When an operand of the preset matrix is less than K, data at an unused pre-mark code location may be input as 0, or a disable signal is input to disable a multiplier, so that an operation amount of the multiplier is reduced.

At the operation layer, an accelerator performs a multiply-accumulate operation on input data, and accumulates and stores an operation result and a last result to an accumulation register at a last layer.

Because there is no need for back pressure in an arithmetic logical unit of the accelerator, all pipelines may run in parallel, so that a throughput rate of the architecture is K FMAC accumulation operations per beat.

In this embodiment of the present invention, information such as the matrix read pointer, the matrix valid pointer, the quantity of valid matrix elements, and the matrix read pointer increment is used to indicate the non-zero element in the to-be-processed matrix, and the non-zero element value is read from the preset matrix, to perform a multiplication operation on the read non-zero element value and a vector data value, so as to improve scheduling accuracy of the matrix element, reduce an operation such as non-zero determining of a matrix element before scheduling of the matrix element value, and reduce scheduling operation complexity of the matrix element. In this embodiment of the present invention, the vector data value corresponding to a location of the matrix element value may be further read from the input vector data based on indication information such as the vector read pointer and the vector read pointer increment, to reduce a matrix element value determining operation in a multiplication operation process, so as to reduce data processing complexity, reduce data processing power consumption, and improve data processing efficiency. In this application, location marking may be further performed on the matrix element of the preset matrix based on a size of data obtained through a single read, to ensure that a bit width of a mark code is fixed, and reduce data processing operation complexity.

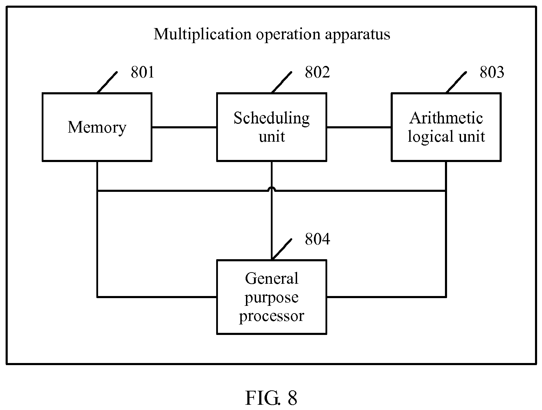

FIG. 8 is a schematic structural diagram of a matrix and vector multiplication operation apparatus according to an embodiment of the present invention. The multiplication operation apparatus provided in this embodiment of the present invention may be specifically a PE described in the embodiments of the present invention. The multiplication operation apparatus provided in this embodiment of the present invention may include a memory 801, a scheduling unit 802, an arithmetic logical unit 802, a general purpose processor 804 (for example, a central processing unit CPU), and the like. The memory 801 may be a matrix RAM, a matrix information RAM, a vector RAM, or the like that is provided in the embodiments of the present invention, and may be specifically determined based on an actual application requirement. This is not limited herein. The scheduling unit 802 may be a functional module such as a read pointer, a filter, or a selector in the PE, or may be a functional module that is in another representation form and that is configured to schedule data stored in the memory 801. This is not limited herein. The arithmetic logical unit 802 may be a functional module such as an adder or an accelerator in the PE. This is not limited herein. The general purpose processor 804 may be alternatively a data preprocessing module outside the PE, or a data initialization module, configured to perform an operation such as matrix data preprocessing or initialization. This is not limited herein.

The memory 801 is configured to store a preset matrix and first indication information of a matrix element of the preset matrix, where the first indication information is used to indicate a non-zero element in the preset matrix.

The scheduling unit 802 is configured to: obtain the first indication information from the memory 801, read a matrix element value of the non-zero element from the preset matrix based on the first indication information, and determine a first location mark code of the read matrix element value, where the first location mark code is a location mark of the matrix element value in matrix data that is obtained through a single read.

The memory 801 is further configured to store input vector data and second indication information of a vector element of the input vector data, where the second indication information is used to indicate to-be-read vector data information.

The scheduling unit 802 is further configured to: read the second indication information from the memory 801, and read, from the input vector data based on the second indication information, a vector element value of a second location mark code corresponding to the first location mark code.

The arithmetic logical unit 803 is configured to calculate a multiplication operation value of the matrix element value and the vector element value that are read by the scheduling unit.

In some feasible implementations, the multiplication operation apparatus further includes:
the general purpose processor 804, configured to: obtain a to-be-processed matrix, and perform location marking on each matrix element in the to-be-processed matrix to obtain a pre-mark code of each matrix element, where each row of the to-be-processed matrix includes K elements, and K is an integer greater than 0.

The general purpose processor 804 is further configured to: select a non-zero element in the to-be-processed matrix, generate the preset matrix based on a pre-mark code of the non-zero element in the to-be-processed matrix, and store the preset matrix to the memory, where each row of the preset matrix includes K non-zero elements.

The general purpose processor 804 is further configured to: generate the first indication information of the matrix element based on the preset matrix and pre-mark codes of various non-zero elements included in the preset matrix, and store the first indication information to the memory.

In some feasible implementations, the general purpose processor 804 is further configured to:
process, based on a preset size of matrix data that is read during current calculation, the pre-mark codes of the various non-zero elements included in the preset matrix, to obtain location mark codes of the various non-zero elements; and add the location mark codes of the various non-zero elements to the first indication information, where
a location mark code of any one of the various non-zero elements is less than the size of the data.

In some feasible implementations, the first indication information includes a matrix read pointer, a matrix valid pointer, and a quantity of valid matrix elements;
the matrix read pointer is used to indicate a to-be-read matrix element row that participates in the current calculation in the preset matrix;
the matrix valid pointer points to a location of a start non-zero element that participates in the current calculation in the to-be-read matrix element row; and
the quantity of valid matrix elements is used to indicate a quantity M of to-be-read non-zero elements that participate in the current calculation, and M is an integer greater than or equal to 1.

The scheduling unit is configured to:
search the preset matrix for a specified matrix element row to which the matrix read pointer points, and read, starting from a specified location to which the matrix valid pointer points, M matrix element values from the specified matrix element row.

In some feasible implementations, the first indication information further includes a matrix read pointer increment; and
an initial value of the matrix read pointer increment is zero, indicating that a to-be-read matrix element row in the current calculation is a matrix element row indicated by the matrix read pointer.

The general purpose processor is configured to:
if M is greater than a quantity of remaining non-zero elements in the to-be-read matrix element row, increase the matrix read pointer increment by 1, where increasing the matrix read pointer increment by 1 indicates that a to-be-read matrix element row in next calculation is two rows after the matrix element row indicated by the matrix read pointer, and
the remaining non-zero elements are non-zero elements that are included in the to-be-read matrix element row and that are after the location to which the matrix valid pointer points.

In some feasible implementations, the general purpose processor 804 is further configured to:
update the matrix read pointer based on the matrix read pointer increment, to obtain a matrix read pointer of the next calculation.

In some feasible implementations, the to-be-read vector data information includes a to-be-read vector data row in the current calculation.

The general purpose processor 804 is further configured to:
determine, based on the pre-mark code of the non-zero element in the to-be-processed matrix, a quantity of non-zero elements included in each matrix element row in the to-be-processed matrix; and generate the second indication information of the vector element based on the quantity of non-zero elements included in each matrix element row, where
the second indication information includes a to-be-read vector data row indicated by a vector read pointer and a vector read pointer increment; and
the vector read pointer increment indicates a quantity of rows spaced between a to-be-read vector data row of the next calculation and a vector data row indicated by the vector read pointer.

In some feasible implementations, the general purpose processor 804 is configured to:
if the quantity of non-zero elements included in each matrix element row is not zero, set the vector read pointer increment to H, where H is a ratio of the preset size of the matrix data that is read during the current calculation to K; or
if a quantity H₁ of matrix element rows whose quantity of non-zero elements included is zero is greater than H, set the vector read pointer increment to H₁.

In some feasible implementations, the scheduling unit 802 is configured to:
search the input vector data for a to-be-read vector data row based on the second indication information, where the input vector data includes T*K elements, and T is an integer greater than 1; and
read, from the vector data row, the vector element value of the second location mark code corresponding to the first location mark code.

In some feasible implementations, the general purpose processor 804 is further configured to:
update the vector read pointer based on the vector read pointer increment, to obtain a vector read pointer of the next calculation.

In specific implementation, by using built-in function units of the multiplication operation apparatus, the multiplication operation apparatus may perform the implementations described in the foregoing embodiments, and details are not described herein again.

In the embodiments of the present invention, information such as the matrix read pointer, the matrix valid pointer, the quantity of valid matrix elements, and the matrix read pointer increment is used to indicate the non-zero element in the to-be-processed matrix, and the non-zero element value is read from the preset matrix, to perform a multiplication operation on the read non-zero element value and a vector data value, so as to improve scheduling accuracy of the matrix element, reduce an operation such as non-zero determining of a matrix element before scheduling of the matrix element value, and reduce scheduling operation complexity of the matrix element. In the embodiments of the present invention, the vector data value corresponding to a location of the matrix element value may be further read from the input vector data based on indication information such as the vector read pointer and the vector read pointer increment, to reduce a matrix element value determining operation in a multiplication operation process, so as to reduce data processing complexity, reduce data processing power consumption, and improve data processing efficiency. In this application, location marking may be further performed on the matrix element of the preset matrix based on a size of data obtained through a single read, to ensure that a bit width of a mark code is fixed, and reduce data processing operation complexity.

## Claims

1. A matrix and vector multiplication operation method, comprising:
obtaining first indication information of a matrix element, wherein the first indication information is used to indicate a non-zero element in a preset matrix;
reading a matrix element value of the non-zero element from the preset matrix based on the first indication information, and determining a first location mark code of the read matrix element value, wherein the first location mark code is a location mark of the matrix element value in matrix data that is obtained through a single read;
obtaining second indication information of a vector element, wherein the second indication information is used to indicate to-be-read vector data information;
reading, from input vector data based on the second indication information, a vector element value of a second location mark code corresponding to the first location mark code; and
obtaining a multiplication operation value of the matrix element value and the vector element value.

2. The method according to claim 1, wherein before the obtaining first indication information of a matrix element, the method further comprises:
obtaining a to-be-processed matrix, and performing location marking on each matrix element in the to-be-processed matrix to obtain a pre-mark code of each matrix element, wherein each row of the to-be-processed matrix comprises K elements, and K is an integer greater than 0;
selecting a non-zero element in the to-be-processed matrix, and generating the preset matrix based on a pre-mark code of the non-zero element in the to-be-processed matrix, wherein each row of the preset matrix comprises K non-zero elements; and
generating the first indication information of the matrix element based on the preset matrix and pre-mark codes of various non-zero elements comprised in the preset matrix.

3. The method according to claim 2, wherein after the generating the preset matrix based on a pre-mark code of the non-zero element in the to-be-processed matrix, the method further comprises:
processing, based on a preset size of matrix data that is read during current calculation, the pre-mark codes of the various non-zero elements comprised in the preset matrix, to obtain location mark codes of the various non-zero elements; and
adding the location mark codes of the various non-zero elements to the first indication information, wherein
a location mark code of any one of the various non-zero elements is less than the size of the data.

4. The method according to claim 2 or 3, wherein the first indication information comprises a matrix read pointer, a matrix valid pointer, and a quantity of valid matrix elements;
the matrix read pointer is used to indicate a to-be-read matrix element row that participates in the current calculation in the preset matrix;
the matrix valid pointer points to a location of a start non-zero element that participates in the current calculation in the to-be-read matrix element row;
the quantity of valid matrix elements is used to indicate a quantity M of to-be-read non-zero elements that participate in the current calculation, and M is an integer greater than or equal to 1; and
the reading a matrix element value of the non-zero element from the preset matrix based on the first indication information comprises:
searching the preset matrix for a specified matrix element row to which the matrix read pointer points, and reading, starting from a specified location to which the matrix valid pointer points, M matrix element values from the specified matrix element row.

5. The method according to claim 4, wherein the first indication information further comprises a matrix read pointer increment;
an initial value of the matrix read pointer increment is zero, indicating that a to-be-read matrix element row in the current calculation is a matrix element row indicated by the matrix read pointer; and
the generating the first indication information of the matrix element based on the preset matrix and pre-mark codes of various non-zero elements comprised in the preset matrix comprises:
if M is greater than a quantity of remaining non-zero elements in the to-be-read matrix element row, increasing the matrix read pointer increment by 1, wherein increasing the matrix read pointer increment by 1 indicates that a to-be-read matrix element row in next calculation is two rows after the matrix element row indicated by the matrix read pointer, and
the remaining non-zero elements are non-zero elements that are comprised in the to-be-read matrix element row and that are after the location to which the matrix valid pointer points.

6. The method according to claim 4, wherein the method further comprises:
updating the matrix read pointer based on the matrix read pointer increment, to obtain a matrix read pointer of the next calculation.

7. The method according to any one of claims 2 to 6, wherein the to-be-read vector data information comprises a to-be-read vector data row in the current calculation; and
before the obtaining second indication information of a vector element, the method further comprises:
determining, based on the pre-mark code of the non-zero element in the to-be-processed matrix, a quantity of non-zero elements comprised in each matrix element row in the to-be-processed matrix; and
generating the second indication information of the vector element based on the quantity of non-zero elements comprised in each matrix element row, wherein
the second indication information comprises a to-be-read vector data row indicated by a vector read pointer and a vector read pointer increment; and
the vector read pointer increment indicates a quantity of rows spaced between a to-be-read vector data row of the next calculation and a vector data row indicated by the vector read pointer.

8. The method according to claim 7, wherein the generating the second indication information of the vector element based on the quantity of non-zero elements comprised in each matrix element row comprises:
if the quantity of non-zero elements comprised in each matrix element row is not zero, setting the vector read pointer increment to H, wherein H is a ratio of the preset size of the matrix data that is read during the current calculation to K; or
if a quantity H₁ of matrix element rows whose quantity of non-zero elements comprised is zero is greater than H, setting the vector read pointer increment to H₁.

9. The method according to claim 7 or 8, wherein the reading, from input vector data based on the second indication information, a vector element value of a second location mark code corresponding to the first location mark code comprises:
searching the input vector data for a to-be-read vector data row based on the second indication information, wherein the input vector data comprises T*K elements, and T is an integer greater than 1; and
reading, from the vector data row, the vector element value of the second location mark code corresponding to the first location mark code.

10. The method according to any one of claims 7 to 9, wherein the method further comprises:
updating the vector read pointer based on the vector read pointer increment, to obtain a vector read pointer of the next calculation.

11. A matrix and vector multiplication operation apparatus, comprising a memory, a scheduling unit, and an arithmetic logical unit, wherein
the memory is configured to store a preset matrix and first indication information of a matrix element of the preset matrix, wherein the first indication information is used to indicate a non-zero element in the preset matrix;
the scheduling unit is configured to: obtain the first indication information from the memory, read a matrix element value of the non-zero element from the preset matrix based on the first indication information, and determine a first location mark code of the read matrix element value, wherein the first location mark code is a location mark of the matrix element value in matrix data that is obtained through a single read;
the memory is further configured to store input vector data and second indication information of a vector element of the input vector data, wherein the second indication information is used to indicate to-be-read vector data information;
the scheduling unit is further configured to: read the second indication information from the memory, and read, from the input vector data based on the second indication information, a vector element value of a second location mark code corresponding to the first location mark code; and
the arithmetic logical unit is configured to calculate a multiplication operation value of the matrix element value and the vector element value that are read by the scheduling unit.

12. The multiplication operation apparatus according to claim 11, wherein the multiplication operation apparatus further comprises:
a general purpose processor, configured to: obtain a to-be-processed matrix, and perform location marking on each matrix element in the to-be-processed matrix to obtain a pre-mark code of each matrix element, wherein each row of the to-be-processed matrix comprises K elements, and K is an integer greater than 0;
the general purpose processor is further configured to: select a non-zero element in the to-be-processed matrix, generate the preset matrix based on a pre-mark code of the non-zero element in the to-be-processed matrix, and store the preset matrix to the memory, wherein each row of the preset matrix comprises K non-zero elements; and
the general purpose processor is further configured to: generate the first indication information of the matrix element based on the preset matrix and pre-mark codes of various non-zero elements comprised in the preset matrix, and store the first indication information to the memory.

13. The multiplication operation apparatus according to claim 12, wherein the general purpose processor is further configured to:
process, based on a preset size of matrix data that is read during current calculation, the pre-mark codes of the various non-zero elements comprised in the preset matrix, to obtain location mark codes of the various non-zero elements; and add the location mark codes of the various non-zero elements to the first indication information, wherein
a location mark code of any one of the various non-zero elements is less than the size of the data.

14. The multiplication operation apparatus according to claim 12 or 13, wherein the first indication information comprises a matrix read pointer, a matrix valid pointer, and a quantity of valid matrix elements;
the matrix read pointer is used to indicate a to-be-read matrix element row that participates in the current calculation in the preset matrix;
the matrix valid pointer points to a location of a start non-zero element that participates in the current calculation in the to-be-read matrix element row;
the quantity of valid matrix elements is used to indicate a quantity M of to-be-read non-zero elements that participate in the current calculation, and M is an integer greater than or equal to 1; and
the scheduling unit is configured to:
search the preset matrix for a specified matrix element row to which the matrix read pointer points, and read, starting from a specified location to which the matrix valid pointer points, M matrix element values from the specified matrix element row.

15. The multiplication operation apparatus according to claim 14, wherein the first indication information further comprises a matrix read pointer increment;
an initial value of the matrix read pointer increment is zero, indicating that a to-be-read matrix element row in the current calculation is a matrix element row indicated by the matrix read pointer; and
the general purpose processor is configured to:
if M is greater than a quantity of remaining non-zero elements in the to-be-read matrix element row, increase the matrix read pointer increment by 1, wherein increasing the matrix read pointer increment by 1 indicates that a to-be-read matrix element row in next calculation is two rows after the matrix element row indicated by the matrix read pointer, and
the remaining non-zero elements are non-zero elements that are comprised in the to-be-read matrix element row and that are after the location to which the matrix valid pointer points.

16. The multiplication operation apparatus according to claim 14, wherein the general purpose processor is further configured to:
update the matrix read pointer based on the matrix read pointer increment, to obtain a matrix read pointer of the next calculation.

17. The multiplication operation apparatus according to any one of claims 12 to 16, wherein the to-be-read vector data information comprises a to-be-read vector data row in the current calculation; and
the general purpose processor is further configured to:
determine, based on the pre-mark code of the non-zero element in the to-be-processed matrix, a quantity of non-zero elements comprised in each matrix element row in the to-be-processed matrix; and generate the second indication information of the vector element based on the quantity of non-zero elements comprised in each matrix element row, wherein
the second indication information comprises a to-be-read vector data row indicated by a vector read pointer and a vector read pointer increment; and
the vector read pointer increment indicates a quantity of rows spaced between a to-be-read vector data row of the next calculation and a vector data row indicated by the vector read pointer.

18. The multiplication operation apparatus according to claim 17, wherein the general purpose processor is configured to:
if the quantity of non-zero elements comprised in each matrix element row is not zero, set the vector read pointer increment to H, wherein H is a ratio of the preset size of the matrix data that is read during the current calculation to K; or
if a quantity H₁ of matrix element rows whose quantity of non-zero elements comprised is zero is greater than H, set the vector read pointer increment to H₁.

19. The multiplication operation apparatus according to claim 17 or 18, wherein the scheduling unit is configured to:
search the input vector data for a to-be-read vector data row based on the second indication information, wherein the input vector data comprises T*K elements, and T is an integer greater than 1; and
read, from the vector data row, the vector element value of the second location mark code corresponding to the first location mark code.

20. The multiplication operation apparatus according to claim 11, wherein the general purpose processor is further configured to:
update the vector read pointer based on the vector read pointer increment, to obtain a vector read pointer of the next calculation.
